Europäisches Patentamt

(19) European Patent Office

Office européen des brevets

(11) Publication number: **0 217 889**
**B1**

(12) **EUROPEAN PATENT SPECIFICATION**

(45) Date of publication of patent specification: **18.07.90**

(21) Application number: **86902353.1**

(22) Date of filing: **11.04.86**

(86) International application number:
**PCT/DK86/00038**

(87) International publication number:
**WO 86/05952 23.10.86 Gazette 86/23**

(51) Int. Cl.⁵: **A 22 B 5/08**

(54) **AN APPARATUS FOR THE SCALDING OF CARCASSES.**

(30) Priority: **12.04.85 DK 1643/85**

(43) Date of publication of application:
**15.04.87 Bulletin 87/16**

(45) Publication of the grant of the patent:
**18.07.90 Bulletin 90/29**

(84) Designated Contracting States:
**DE FR GB NL SE**

(56) References cited:
**DK-B- 129 076**
**US-A-3 343 477**

(73) Proprietor: **Slagteriernes Forskningsinstitut**
**Maglegaardsvej 2**
**DK-4000 Roskilde (DK)**

(72) Inventor: **THORSEN, Olaf**
**Harpevej 6**
**DK-3650 Olstykke (DK)**

(74) Representative: **Alexander, Thomas Bruce et al**
**Boult, Wade & Tennant 27 Furnival Street**
**London EC4A 1PQ (GB)**

Courier Press, Leamington Spa, England.

EP 0 217 889 B1

## Description

The present invention relates to an apparatus for the scalding of carcasses.

In bacon factories the carcasses are exposed to hot water or a hot and humid air current for a suitable period until dead surface layers and bristles have loosened. The parts can then be removed in a machine by means of rotary beating straps.

In the scalding by a hot air current, the carcasses are conveyed through a cabin in which a vertical air current with a high humidity and a temperature of 60 to 70°C is provided. The aqueous vapour in the air condenses as water droplets on the rind surface of the carcasses, and heat is thus supplied to the rind. After 6 to 10 minutes of treatment the surface layer and bristles of the carcass have loosened sufficiently to be removed in a machine.

In order to ensure uniform scalding of the rind surface it is necessary to maintain the temperature and humidity of the circulating air.

One prior art apparatus uses electric heaters together with steam to maintain a fixed temperature and air humidity, for example 85 to 95% relative humidity. A humidity sensor and a temperature sensor control the electric heaters and the steam supply. The steam consumption is thus reduced but at the same time electric power is required which normally is more expensive than fuel used in steam generators.

Owing to the fact that the loading of the cabin is constantly changing it appears difficult to obtain a satisfactory joint control of both temperature and humidity.

DK-8-129 076 (Stege) discloses apparatus for the singeing of pig carcasses which apparatus comprises a singeing chamber through which carcasses are to be conveyed, blowers and air ducts outside of the singeing chamber. Burners are situated in the air ducts. Fresh air is blown down the ducts, is heated by the burners and flows up through the singeing chamber and out at the top through a vent pipe. The burners also heat the walls of the singeing chamber, which walls then radiate heat to the carcasses in the singeing chamber. Singeing of pig carcasses to remove the bristles involves temperatures of several hundred degrees Celsius.

US-A-3343477 (Ekstam) discloses apparatus for the scalding of carcasses comprising a thermally insulated treatment cabin through which carcasses are to be conveyed, a fan and an air duct which is disposed outside of the treatment cabin, the treatment cabin and air duct forming a closed circuit for the circulation of hot and humid air induced by the fan.

In this known apparatus, steam is introduced by means of a steam pipe through a pan of water into the bottom of the air duct, the fan drawing steam laden air up the air duct and then into and down the treatment cabin. As the steam laden air enters the top of the treatment cabin, it passes over a cooling element, such as a cold water pipe, and forms a hot wet mist which scalds the carcass. This apparatus consumes a large amount of energy because of the heat lost through the cooling element.

The invention is characterised in that a burner and a water atomizer open directly into the air duct, and in that the treatment cabin has an air discharge duct for the discharge of air from the treatment cabin corresponding to the fresh air introduced by the burner into the air duct.

The apparatus according to the invention is advantageous in that only one heat source is used which supplies the necessary amount of heat directly, neither more nor less. The heat is utilized directly for production of vapour and heating of the circulating air, which means that the heat source is very cheap in operation.

By adjusting the burner output, it is also possible to keep both temperature and air humidity constant which results in a very simple control.

A temperature sensor may be placed in the closed circuit and be connected to a control unit for the direct regulation of the burner output in order to maintain a constant condition in the cabin.

The water atomizer may comprise an atomizing nozzle and a water pump connected to the nozzle, particularly one with a constant output.

In order to collect and re-use surplus water from the water atomizer a basin may be placed below the atomizing nozzle in the air duct, and the suction side of the water pump may be connected to the basin.

The air discharge duct may be equipped with an air/water heat exchanger, the water outlet of which may be connected to the suction side of the water pump. In this way, the heat in the discharge gas may be used for preheating of the water which is supplied to the pump.

One or more belt conveyor systems may be provided for conveying lying carcasses through the treatment cabin. This embodiment has the advantage of not discolouring the rind as is the case with scalding of suspended carcasses.

In order to produce a uniform scalding, the or each belt of the system may be designed with a considerable perforated area enabling the passage of humid air at right angles to the plane of the belt. The or each belt may be in the form of a net easily penetrated by the humid air.

A sliding bar may be provided along which suspended carcasses may be conveyed through the treatment cabin. The result is a simpler construction and maintenance than with the above-mentioned belt conveyor system.

Three different embodiments of a scalding apparatus for pig and sow carcasses will now be described by way of example and with reference to the accompanying drawings, of which:

Fig. 1 shows a scalding cabin with a suspended carcass conveyed on a sliding bar,

Fig. 2 shows a cabin with a lying carcass conveyed on a belt, and

Fig. 3 shows a corresponding cabin, but with three belts for conveying the carcasses.

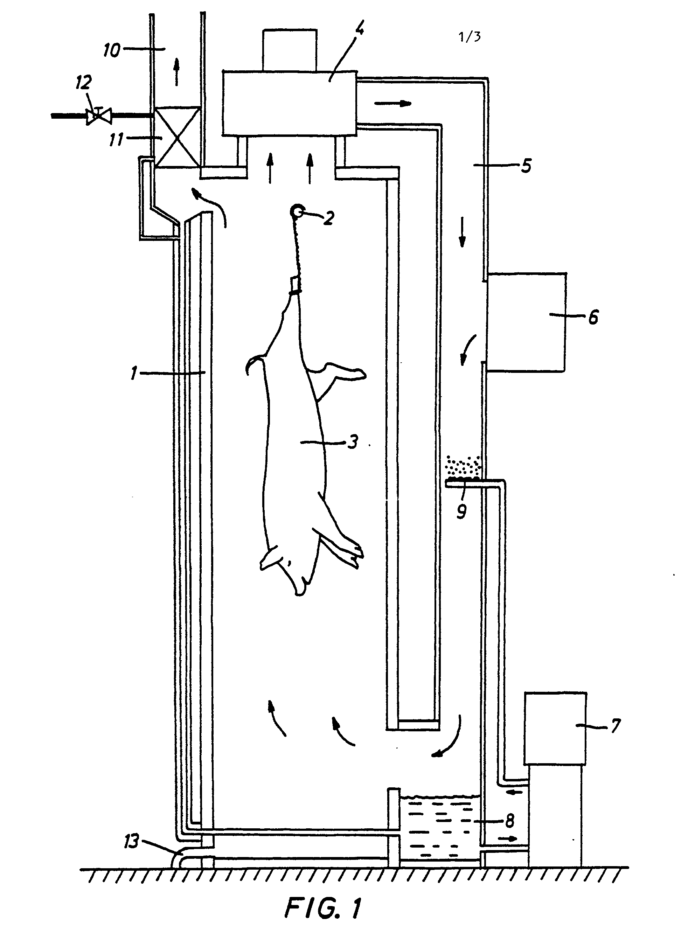

The apparatus shown in Fig. 1 is designed for the scalding of approximately 160 carcasses per hour. It comprises a treatment cabin 1, approximately 15 meters long with thermally insulated walls. A sliding bar 2 extends through the cabin along which suspended carcasses 3 are to be conveyed by drivers (not shown). A number of air circulation systems are installed at intervals of approximately three metres seen in the longitudinal direction of the cabin.

Each system consists of a fan 4 and an air duct 5 which guides the air from the fan outlet to an opening at the bottom of the treatment cabin 1. An opening in the wall of the air duct accommodates a burner 6 with a fan in such a way that the combustion gas is supplied to the duct 5. A gas or oil burner is used. An air temperature sensor is fitted in the interior of the cabin 1 to regulate the burner output by means of a control system.

A water pump 7 sucks water through a basin 8 at the bottom of the duct 5 and pumps it through atomizing nozzles 9 placed in the centre of the duct. The nozzles 9 and the pumps 7 are so dimensioned that there will be a surplus of atomized water even at the maximum output of the burners.

At the top of cabin 1, air discharge ducts 10 are located which are equipped with air/water heat exchangers 11. Demineralized water may be supplied to the water side of each heat exchanger through a valve 12 which is controlled by a level sensor in the basin 8. The water preheated in the heat exchanger flows, together with the condensate drops of the heat exchanger 11, through a tube to the basin 8 which supplies the water pump 7.

The cabin bottom holds a drain 13 for the removal of condensate dripping from the suspended carcasses 3.

The apparatus works as follows:

Pig carcasses 3 are moved along the sliding bar 2 and enter the cabin 1 through an air lock which keeps the hot, humid circulating air inside the cabin. The air sweeps up along the sides of the carcasses which are cooled to such an extent that condensate is formed on the rind surface which is gradually scalded during the passage of the carcasses through the cabin.

The cooled and dehumidified air sucked away by the fans 4 is re-heated and re-humidified in the ducts 5 by means of the burners 6 and the nozzles 9. The output of each burner 6 is regulated automatically by means of the temperature sensor, so that the air sweeping alongside the carcasses is maintained at a constant condition, for example a temperature of 67°C and a relative humidity of 95 to 100%.

The air temperature may be controlled in each circulation system independently of the temperatures in the adjacent circulation system, for example so that a higher temperature is maintained in the cabin inlet than in the outlet.

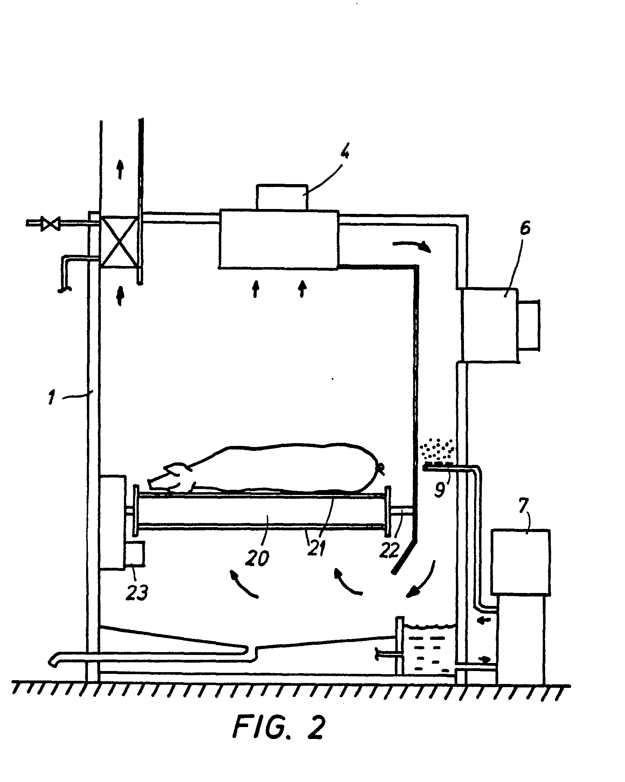

The apparatus shown in Fig. 2 is designed in a way similar to that used in the apparatus shown in Fig. 1, but instead of the sliding bar 2 it has a belt system 20 for conveying the carcasses in the scalding cabin. The belt system consists of a metal net 21 supported and moved by rollers whose axles 22 rest in bearings at both ends. The axles are driven by motor units 23 at such a speed that it takes approximately 7 minutes for a carcass placed on the net 21 at one end of the cabin to reach the opposite end of the cabin in the scalded state.

As in Fig. 1, reference numerals 4, 6, 7 and 9 designate a fan, a gas burner, a water pump, and a water atomizer.

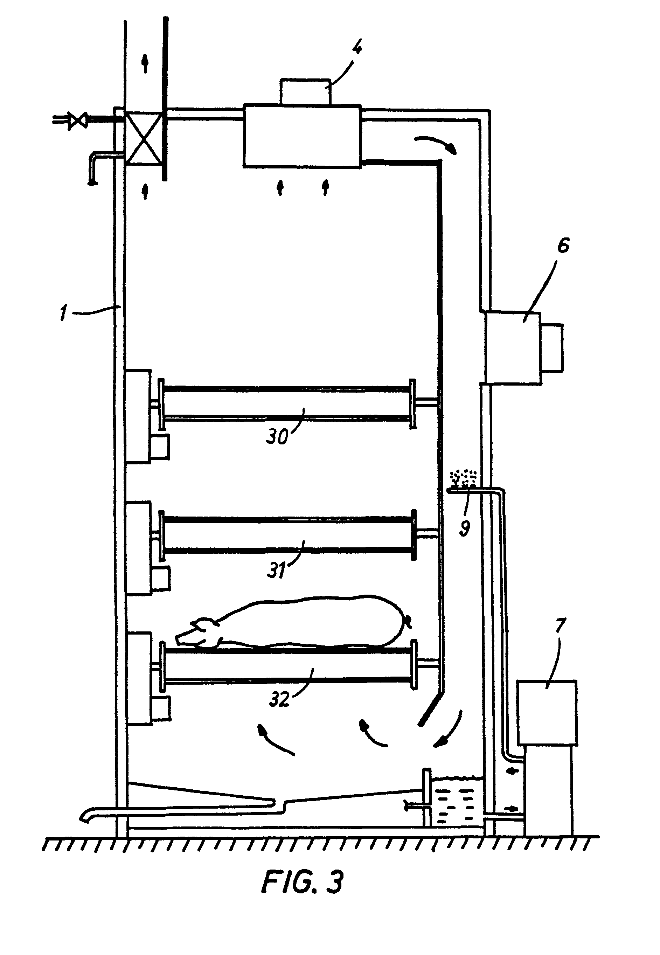

The apparatus shown in Fig. 3 is designed in a way similar to that used in the apparatus of Fig. 2, but comprises three belt systems 30, 31 and 32 instead of one. The length of the apparatus is approximately 10 metres and it is capable of scalding 320 carcasses per hour. The belt systems are interconnected enabling each carcass to follow an S-shaped path when being conveyed from the inlet of the upper system 30 by way of the system 31 to the outlet of the lower system.

The folding of the conveyor path means that the cabin is considerably shorter and more economical as regards heat consumption than the cabin type shown in Fig. 2. As in Figs. 1 and 2, the reference numerals 4, 6, 7 and 9 designate a fan, a gas burner, a water pump and a water atomizer. They are used and regulated in the same way in all the three embodiments.

Because of the simple regulation obtained by the thermostatically controlled burner, the carcasses will be swept constantly by air of the correct temperature and humidity. The burners are stepped down automatically when the cabin is empty because it is only necessary to compensate for the heat loss through the walls of the cabin. As soon as the cabin is loaded with carcasses, the cabin air is immediately supplied with sufficient heat and humidity through increased burner outputs controlled directly by the temperature sensors.

**Claims**

1. Apparatus for the scalding of carcasses comprising a thermally insulated treatment cabin (1) through which carcasses (3) are to be conveyed, a fan (4) and an air duct (5) which is disposed outside of the treatment cabin (1), the treatment cabin (1) and air duct (5) forming a closed circuit for the circulation of hot and humid air induced by the fan (4), characterised in that a burner (6) and a water atomizer (9) open directly into the air duct (5), and in that the treatment cabin (1) has an air discharge duct (10) for the discharge of air from the treatment cabin (1) corresponding to the fresh air introduced by the burner (6) into the air duct (5).

2. An apparatus as claimed in claim 1, characterised in that a temperature sensor is placed in the closed circuit and is connected to a control unit for the direct regulation of the output of the burner (6).

3. An apparatus as claimed in claim 1 or 2, characterised in that the water atomizer comprises an atomizing nozzle (9) and a water pump (7) connected to the nozzle.

4. An apparatus as claimed in claim 3, characterised in that a basin (8) is placed below the atomizing nozzle (9) in the air duct (5), and that the suction side of the water pump (7) is connected to the basin (8).

5. An apparatus as claimed in claim 3 or 4, characterised in that the air discharge duct (10) is equipped with an air/water heat exchanger (11), the water outlet of which is connected to the suction side of the water pump (7).

6. An apparatus as claimed in any preceding claim, characterised in that one or more belt conveyor systems (20; 30, 31, 32) are provided for conveying lying carcasses (3) through the treatment cabin (1).

7. An apparatus as claimed in claim 6, characterised in that the or each belt (21) of the system is designed with a considerable perforated area enabling the passage of humid air at right angles to the plane of the belt.

8. An apparatus as claimed in claim 7, characterised in that the or each belt is in the form of a net.

9. An apparatus as claimed in any one of claims 1 to 5, characterised in that a sliding bar (2) is provided along which suspended carcasses (3) may be conveyed through the treatment cabin (1).

## Patentansprüche

1. Einrichtung zum Brühen von Schlachtkörpern, umfassend eine wärmeisolierte Behandlungskammer (1), durch die Schlachtkörper (3) zu fördern sind, ein Gebläse (4) und einen Luftkanal (5), der außerhalb der Behandlungskammer (1) angeordnet ist, wobei die Behandlungskammer (1) und der Luftkanal (5) einen geschlossenen Kreislauf für die Umwälzung von durch das Gebläse (4) angesaugter heißer und feuchter Luft bilden, dadurch gekennzeichnet, daß ein Brenner (5) und ein Wasserzerstäuber (9) direkt in den Luftkanal (5) münden und daß die Behandlungskammer (1) einen Luftaustrittskanal (10) für das Ableiten von Luft aus der Behandlungskammer (1) entsprechend der vom Brenner (6) in den Luftkanal (5) eingeleiteten Frischluft aufweist.

2. Einrichtung nach Anspruch 1, dadurch gekennzeichnet, daß in dem geschlossenen Kreislauf ein Temperatursensor angeordnet und mit einer Regeleinheit für die direkte Regelung der Ausgangsleistung des Brenners (6) verbunden ist.

3. Einrichtung nach Anspruch 1 oder 2, dadurch gekennzeichnet, daß der Wasserzerstäuber eine Zerstäubungsdüse (9) und eine an die Düse angeschlossene Wasserpumpe (7) aufweist.

4. Einrichtung nach Anspruch 3, dadurch gekennzeichnet, daß unter der Zerstäuberdüse (9) in dem Luftkanal (5) ein Becken (8) angeordnet ist und daß die Saugseite der Wasserpumpe (7) an das Becken (8) angeschlossen ist.

5. Einrichtung nach Anspruch 3 oder 4, dadurch gekennzeichnet, daß der Luftaustrittkanal (10) einen Luft/Wasser Wärmetauscher (11) aufweist, dessen Wasserauslaß an die Saugseite der Wasserpumpe (7) angeschlossen ist.

6. Einrichtung nach einem der vorhergehenden Ansprüche, dadurch gekennzeichnet, daß eines oder mehrere Bandfördersysteme (20; 30, 31, 32) vorgesehen sind, um liegende Schlachtkörper (3) durch die Behandlungskammer zu fördern.

7. Einrichtung nach Anspruch 6, dadurch gekennzeichnet, daß das bzw. jedes Band (21) des Systems mit einer beträchtlichen perforierten Fläche ausgebildet ist, um den Durchtritt von feuchter Luft rechtwinklig zur Ebene des Bandes zu ermöglichen.

8. Einrichtung nach Anspruch 7, dadurch gekennzeichnet, daß das bzw. jedes Band als Netz ausgebildet ist.

9. Einrichtung nach einem der Ansprüche 1—5, dadurch gekennzeichnet, daß eine Gleitstange (2) vorgesehen ist, entlang welcher hängende Schlachtkörper (3) durch die Behandlungskammer (1) förderbar sind.

## Revendications

1. Installation d'échaudage de carcasses, comprenant une cabine de traitement (1) à isolation thermique, à travers laquelle des carcasses (3) doivent être transportées, un ventilateur (4) et un conduit d'air (5) qui est disposé à l'extérieur de la cabine de traitement (1), cette cabine de traitement (1) et ce conduit d'air (5) formant un circuit fermé permettant la circulation d'air chaud et humide produite par le ventilateur (4), caractérisée en ce qu'un brûleur (6) et un atomiseur d'eau (9) débouchent directement dans le conduit d'air (5) et en ce que la cabine de traitement (1) comporte un conduit d'évacuation d'air (10) permettant l'évacuation de l'air provenant de cette cabine de traitement (1) et correspondant à l'air frais introduit par le brûleur (6) dans le conduit d'air (5).

2. Installation suivant la revendication 1 caractérisée en ce, qu'un détecteur de température est placé dans le circuit fermé et est relié à une unité de régulation permettant la régulation directe du débit du brûleur (6).

3. Installation suivant la revendication 1 ou 2, caractérisée en ce que l'atomiseur d'eau comprend une buse d'atomisation (9) et une pompe à eau (7) reliée à cette buse.

4. Installation suivant la revendication 3, caractérisée en ce qu'un bassin (8) est placé au-dessous de la buse d'atomisation (9) dans le conduit d'air (5) et en ce que le côté aspiration de la pompe à eau (7) est relié à ce bassin (8).

5. Installation suivant la revendication 3 ou 4, caractérisée en ce que le conduit d'évacuation (10) est équipé d'un échangeur thermique air/eau (11) dont la sortie d'eau est reliée au côté aspiration de la pompe à eau (7).

6. Installation suivant l'une quelconque des revendications précédentes, caractérisée en ce qu'un ou plusieurs dispositifs transporteurs à bande (20; 30, 31, 32) sont prévus pour transporter des carcasses couchées (3) à travers la cabine de traitement (1).

7. Installation suivant la revendication 6, caractérisée en ce que la ou chaque bande (21) du dispositif est conçue avec une surface perforée considérable permettant le passage de l'air humide à angle droit par rapport au plan de la bande.

8. Installation suivant la revendication 7, caractérisée en ce que la ou chaque bande peut se présenter sous la forme d'un treillis.

9. Installation suivant l'une quelconque des revendications 1 à 5, caractérisée en ce qu'il est prévu une barre de glissement (2) le long de laquelle des carcasses suspendues (3) peuvent être transportées à travers la cabine de traitement (1).

FIG. 1

FIG. 2

FIG. 3